# EUROPÄISCHE PATENTANMELDUNG

(11) **EP 4 224 679 A1**
(43) Veröffentlichungstag der Anmeldung: **09.08.2023**
(21) Anmeldenummer: 22155272.2
(22) Anmeldetag: 04.02.2022
(51) Int. Cl.: H02K 1/24, H02K 19/10, H02K 19/22, H02K 29/03

(54) **ROTORBLECHPAKET FÜR EINE FREMDERREGTE ELEKTRISCHE SYNCHRONMASCHINE MIT VERBESSERTER SCHRÄGUNG**

(71) Anmelder: Valeo eAutomotive Germany GmbH, 91056 Erlangen (DE)
(72) Erfinder: Waider, Sebastian, 97616 Bad Neustadt a.d.Saale (DE)
(74) Vertreter: Valeo Powertrain Systems

(57) **Zusammenfassung**

Es wird ein Rotorblech (5) für ein Rotorblechpaket (4) eines Rotors (2) einer fremderregten elektrischen Synchronmaschine (1) angegeben, welches einen ringförmigen Innenteil (15) mit mehreren sternförmig nach außen weisenden Fortsätzen (16) umfasst, wobei jeder Fortsatz (16) einen an den Innenteil (15) anschließenden Basisteil (17) und einen daran anschließenden breiteren Kopfteil (18) aufweist. Dabei ist der Kopfteil (18) asymmetrisch zum Basisteil (17) angeordnet. Darüber hinaus wird ein Rotorblechpaket (4) mit mehreren solchen Rotorblechen (5), ein Rotor (2) mit einem solchen Rotorblechpaket (4), eine fremderregte elektrische Synchronmaschine (1) mit eine solchen (2) Rotor sowie ein Fahrzeug (20) mit einer solchen fremderregten elektrischen Synchronmaschine angegeben (1).

## Beschreibung

### TECHNISCHES GEBIET

Die Erfindung betrifft ein Rotorblech für ein Rotorblechpaket eines Rotors einer fremderregten elektrischen Synchronmaschine, welches einen ringförmigen Innenteil mit mehreren sternförmig nach außen weisenden Fortsätzen umfasst, wobei jeder Fortsatz einen an den Innenteil anschließenden Basisteil und einen an den Basisteil anschließenden breiteren Kopfteil aufweist. Weiterhin betrifft die Erfindung ein Rotorblechpaket mit mehreren Rotorblechen der genannten Art, einen Rotor mit einem Rotorblechpaket der genannten Art, eine fremderregte elektrische Synchronmaschine mit einem Rotor der genannten Art sowie ein Fahrzeug mit einer fremderregten elektrischen Synchronmaschine der genannten Art.

### STAND DER TECHNIK

Die endliche Anzahl an Polen eines Rotors einer fremderregten elektrischen Synchronmaschine führt naturgemäß zu Schwankungen im Drehmomentverlauf beziehungsweise zu einer Neigung zum "Einrasten" bei bestimmten Drehwinkeln. Dies führt zu unerwünschten Vibrationen in den von einer solchen elektrischen Maschine angetriebenen Vorrichtungen. Um diese Drehmomentschwankungen zu beseitigen oder wenigstens zu verringern, ist es bekannt, das Rotorblechpaket der elektrischen Maschine zu schrägen. Dabei verlaufen die Pole beziehungsweise die genannten Fortsätze nicht in axialer Richtung, sondern folgen einer Schraubenlinie beziehungsweise einer Helix. Nachteilig ist dabei der relativ komplizierte Aufbau eines solchen Rotors. Insbesondere betrifft dies die Rotorwicklungen und deren Wicklungsdrähte, die bei einer solchen Bauweise ebenfalls schraubenförmig beziehungsweise helixförmig verlaufen, wodurch der Rotor technisch nur aufwändig herstellbar ist.

### OFFENBARUNG DER ERFINDUNG

Eine Aufgabe der Erfindung ist es daher, ein verbessertes Rotorblech, ein verbessertes Rotorblechpaket, einen verbesserten Rotor, eine verbesserte fremderregte elektrische Synchronmaschine sowie ein verbessertes Fahrzeug anzugeben. Insbesondere soll ein Drehmomentverlauf der genannten elektrischen Maschine verbessert, das heißt geglättet werden, ohne die Herstellung der Rotorwicklung zu verkomplizieren.

Die Aufgabe der Erfindung wird mit einem Rotorblech der eingangs genannten Art gelöst, bei welchem der Kopfteil asymmetrisch zum Basisteil eines Fortsatzes angeordnet ist. Das heißt, der Kopfteil ist gegenüber dem Basisteil um eine Rotationsachse des Rotorblechs oder Rotors verdreht und/oder verschoben, beziehungsweise ist eine Mittel- oder Symmetrieachse des Kopfteils gegenüber einer Mittel- oder Symmetrieachse des Basisteils verdreht und/oder verschoben. Dementsprechend ergibt sich eine Asymmetrie der Fortsätze.

Weiterhin wird die Aufgabe der Erfindung mit einem Rotorblechpaket für einen Rotor einer fremderregten elektrischen Synchronmaschine gelöst, welches mehrere aufeinandergestapelte beziehungsweise axial aneinandergereihte Rotorbleche der genannten Art aufweist, wobei die Basisteile der Fortsätze jeweils deckungsgleich übereinanderliegen.

Darüber hinaus wird die Aufgabe der Erfindung durch einen Rotor für eine fremderregte elektrische Synchronmaschine gelöst, welcher eine Rotorwelle aufweist, ein auf der Rotorwelle angeordnetes Rotorblechpaket der genannten Art, sowie mehrere Erregerwicklungen, welche jeweils um mehrere Basisteile gewunden sind.

Zudem wird die Aufgabe der Erfindung durch eine fremderregte elektrische Synchronmaschine gelöst, welche einen Stator umfasst sowie einen im Stator angeordneten Rotor der oben genannten Art, der gegenüber dem Stator um die Rotationsachse des Rotors drehbar gelagert ist.

Schließlich wird die Aufgabe der Erfindung mit einem Fahrzeug gelöst, das einen Antriebsstrang und eine fremderregte elektrische Synchronmaschine der oben genannten Art aufweist, wobei die fremderregte elektrische Synchronmaschine zum Antreiben des Fahrzeugs vorgesehen ist.

Durch die vorgeschlagenen Maßnahmen kann eine Schrägung eines Rotorblechpakets trotz axial verlaufender Basisteile und damit axial verlaufender Wicklungsdrähte erreicht werden. Mit anderen Worten kann ein Wicklungsdraht der Erregerwicklung trotz des asymmetrischen Aufbaus des Pols beziehungsweise Fortsatzes gerade ausgerichtet sein, wodurch das Herstellen der Erregerwicklung technisch vergleichsweise einfach ist. Das heißt, der der Drehmomentverlauf einer solchen elektrischen Maschine kann verbessert (geglättet) werden, ohne die Herstellung der Rotorwicklung gegenüber einer ungeschrägten Bauweise zu verkomplizieren.

Generell kann die Asymmetrie bei allen Kopfteilen eines Rotorblechs gleich groß sein, grundsätzlich kann sie aber auch unterschiedlich sein. Weiterhin können die Kopfteile in sich symmetrisch sein. Die Kopfteile können aber auch eine asymmetrische Form aufweisen (und nicht bloß gegenüber dem Basisteil verdreht/verschoben sein).

Weitere vorteilhafte Ausgestaltungen und Weiterbildungen der Erfindung ergeben sich aus den Unteransprüchen sowie aus der Beschreibung in Zusammenschau mit den Figuren.

Von Vorteil ist es, wenn bei dem vorgeschlagenen Rotorblech die (insbesondere alle) Basisteile symmetrisch angeordnet sind. Mit anderen Worten sind die Basisteile gleichmäßig über den Umfang verteilt, das heißt um jeweils denselben Winkel um die Rotationsachse des Rotorblechs oder Rotors gegeneinander verdreht. Demzufolge sind auch die Abstände zwischen benachbarten Basisteilen gleich. Insbesondere beziehen sich die obigen Aussagen dabei auf die (radial verlaufenden) Mittel- oder Symmetrieachsen der Basisteile. Durch diese Maßnahmen ist der Abstand zwischen den Erregerwicklungen gleich groß, wodurch diese gleichmäßig und dicht gewickelt werden können.

Vorteilhaft sind die Rotorbleche in einem ersten Abschnitt des Rotorblechpakets gegenüber den Rotorblechen in einem zweiten Abschnitt des Rotorblechpakets um 180° um eine jeweilige Mittelachse gedreht. Insbesondere ist die Drehachse eine Mittel- oder Symmetrieachse eines Basisteils, die rechtwinkelig zu einer Rotationsachse des Rotorblechpakets ausgerichtet ist, beziehungsweise die in der Ebene eines Rotorbleches durch dessen Mittelpunkt verläuft. Mit anderen Worten ist die Asymmetrie der Kopfteile gegenüber den Basisteilen in den beiden Abschnitten betragsmäßig gleich groß, jedoch entgegengesetzt gerichtet. Vorteilhaft kann eine Schrägung des Rotorblechpakets auf diese Weise mit an sich identischen Rotorblechen durch bloße Verdrehung einiger der Rotorbleche erreicht werden. Der Aufwand für die Herstellung eines solchen Rotorblechpakets ist damit nicht größer als der Aufwand für ein ungeschrägtes Rotorblechpaket. An dieser Stelle wird angemerkt, dass sich der Begriff "Asymmetrie" im Rahmen der Offenbarung stets auf eine (einzige) Beobachtungsrichtung / Axialrichtung bezieht. Beispielsweise kann die Beobachtungsrichtung in Axialrichtung von vorne oder von hinten sein.

Günstig ist es auch, wenn das Rotorblechpaket mehrere Rotorbleche aufweist, welche sich in der Asymmetrie ihrer Fortsätze voneinander unterscheiden. Das heißt, eine Verdrehung und/oder Verschiebung des jeweiligen Kopfteils gegenüber dem jeweiligen Basisteil ist unterschiedlich groß. Auf diese Weise kann eine beliebige Stufung oder Schrägung der Pole, deren Basis die Fortsätze bilden, erzielt werden.

Günstig ist es weiterhin, wenn die Asymmetrie der Fortsätze über die Länge des Rotorblechpakets (das heißt in Axialrichtung) abschnittsweise konstant ist und zwischen zwei Abschnitten sprunghaft jeweils im selben Richtungssinn zunimmt. Das heißt, die Verdrehung und/oder Verschiebung des Kopfteils gegenüber dem jeweiligen Basisteil ist innerhalb eines Abschnitts gleich groß, nimmt aber von Abschnitt zu Abschnitt zu oder ab. Dadurch ergibt sich eine lineare Schrägung des Rotorblechpakets, zumindest wenn die Verdrehung und/oder Verschiebung zwischen den Abschnitten jeweils um denselben Betrag zunimmt.

Günstig ist es aber auch, wenn die Asymmetrie der Fortsätze über die Länge des Rotorblechpakets abschnittsweise konstant ist und in einer ersten Abschnittsgruppe zwischen zwei Abschnitten sprunghaft jeweils im selben Richtungssinn zunimmt und in einer daran anschließenden zweiten Abschnittsgruppe zwischen zwei Abschnitten sprunghaft jeweils im selben Richtungssinn abnimmt. In diesem Fall ergibt sich eine pfeilförmige beziehungsweise V-förmige Schrägung des Rotorblechpakets.

Von Vorteil ist es schließlich auch, wenn die Asymmetrie der Fortsätze über die Länge des Rotorblechpakets oder eines (mehr als zwei Rotorbleche aufweisenden) Abschnitts des Rotorblechpakets kontinuierlich (das heißt von Rotorblech zu Rotorblech) zunimmt. Auf diese Weise ergibt sich eine (quasi)kontinuierliche Schrägung des Rotorblechpakets.

### KURZE BESCHREIBUNG DER FIGUREN

Ausführungsbeispiele der Erfindung sind exemplarisch in den beigefügten schematischen Figuren dargestellt. Es zeigen:
- Fig. 1: eine fremderregte elektrische Synchronmaschine im Halbschnitt;
- Fig. 2: ein Rotorblech in Draufsicht;
- Fig. 3: aufeinandergestapelte Fortsätze mehrerer Rotorbleche für einen Pol der elektrischen Maschine in Schrägansicht;
- Fig. 4: die Fortsätze aus Fig. 3 mit montierter Rotorwicklung;
- Fig. 5: aufeinandergestapelte Fortsätze mit zwei linear versetzten Abschnitten in Draufsicht;
- Fig. 6: aufeinandergestapelte Fortsätze mit vier linear versetzten Abschnitten in Draufsicht;
- Fig. 7: aufeinandergestapelte Fortsätze mit fünf linear versetzten Abschnitten in Draufsicht;
- Fig. 8: aufeinandergestapelte Fortsätze mit vier pfeilförmig versetzten Abschnitten in Draufsicht;
- Fig. 9: aufeinandergestapelte Fortsätze mit fünf pfeilförmig versetzten Abschnitten in Draufsicht und
- Fig. 10: eine elektrische Maschine der vorgeschlagenen Art, welche in ein Fahrzeug eingebaut ist.

### DETAILIERTE BESCHREIBUNG DER ERFINDUNG

Einführend wird festgehalten, dass gleiche Teile in den unterschiedlichen Ausführungsformen mit denselben Bezugszeichen beziehungsweise Bauteilbezeichnungen versehen werden, gegebenenfalls mit unterschiedlichen Indizes. Die in der Beschreibung enthaltene Offenbarung eines Bauteils kann sinngemäß auf ein anderes Bauteil mit demselben Bezugszeichen beziehungsweise derselben Bauteilbezeichnung übertragen werden. Auch sind die in der Beschreibung gewählten Lageangaben, wie zum Beispiel "oben", "unten", "hinten", "vorne", "seitlich" und so weiter auf die unmittelbar beschriebene sowie dargestellte Figur bezogen und bei einer Lageänderung sinngemäß auf die neue Lage zu übertragen.

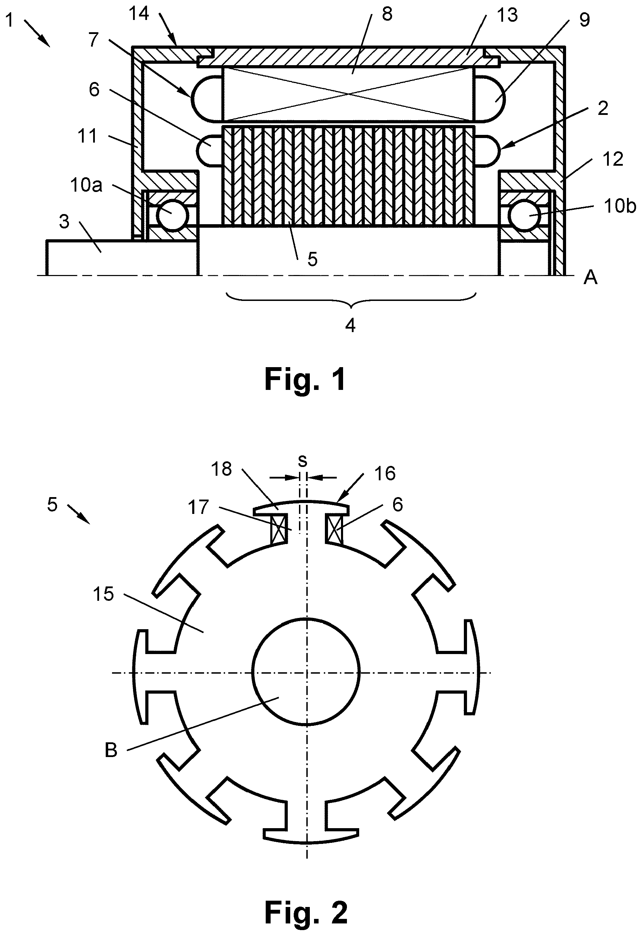

Fig. 1 zeigt einen Halbschnitt durch eine beispielhafte, schematisch dargestellte elektrische Maschine 1, welche als fremderregte elektrische Synchronmaschine ausgebildet ist. Die elektrische Maschine 1 umfasst einen Rotor 2 mit einer Rotorwelle 3 und einem auf der Rotorwelle 3 sitzenden Rotorblechpaket 4 mit mehreren aufeinandergestapelten Rotorblechen 5 und mehreren darin beziehungsweise daran angeordneten Erregerwicklungen 6. Die elektrische Maschine 1 umfasst weiterhin einen Stator 7 mit einem Statorblechpaket 8 mit mehreren Statorblechen, die in diesem Beispiel nicht im Einzelnen dargestellt sind, sowie in beziehungsweise an diesen angeordnete Statorwicklungen 9. Der Rotor 2 beziehungsweise die Rotorwelle 3 ist mit Hilfe von (Wälz)lagern 10a, 10b um eine Rotationsachse A gegenüber dem Stator 7 drehbar gelagert. Konkret sitzt das erste Lager 10a in einem ersten Lagerschild 11 und das zweite Lager 10b in einem zweiten Lagerschild 12. Weiterhin umfasst die elektrische Maschine 1 ein (mittleres) Gehäuseteil 13, welches das erste Lagerschild 11 und das zweite Lagerschild 12 verbindet und den Stator 7 aufnimmt. Das erste Lagerschild 11, das zweite Lagerschild 12 und das Gehäuseteil 13 bilden in diesem Beispiel das Gehäuse 14 der elektrische Maschine 1.

Die Fig. 2 zeigt ein beispielhaftes Rotorblech 5 in Draufsicht. Das Rotorblech 5 umfasst einen ringförmigen Innenteil 15 mit mehreren sternförmig nach außen weisenden Fortsätzen 16, wobei jeder Fortsatz 16 einen an den Innenteil 15 anschließenden Basisteil 17 und einen daran anschließenden breiteren Kopfteil 18 aufweist. Beispielhaft ist im Bereich eines Fortsatzes 16 die Erregerwicklung 6 symbolisch dargestellt.

Wie aus der Fig. 2 erkennbar ist, ist der Kopfteil 18 asymmetrisch zum Basisteil 17 angeordnet. Mit anderen Worten ist der Kopfteil 18 gegenüber dem Basisteil 17 um die Rotationsachse A des Rotorblechs 5 beziehungsweise Rotors 2 verdreht und/oder verschoben, konkret eine Mittel- oder Symmetrieachse des Kopfteils 18 gegenüber einer Mittel- oder Symmetrieachse des Basisteils 17. Die Verdrehung/Verschiebung ist in der Fig. 2 mit dem Bezugszeichen s bezeichnet.

In dem gezeigten Beispiel ist die Asymmetrie bei allen Fortsätzen 16 gleich, denkbar ist aber auch, dass die Asymmetrie der Fortsätze 16 unterschiedlich ist. Weiterhin sind die Kopfteile 18 bei diesem Ausführungsbeispiel in sich symmetrisch. Auch dies ist keine zwingende Bedingung, sondern es ist denkbar, dass die Kopfteile 18 in sich asymmetrisch geformt sind (das heißt nicht bloß gegenüber dem jeweiligen Basisteil 17 verdreht und/oder verschoben sind.

Von Vorteil ist es auch, wenn die (und insbesondere alle) Basisteile 17 symmetrisch angeordnet sind, das heißt um jeweils denselben Winkel um die Rotationsachse A des Rotorblechs 5 beziehungsweise Rotors 2 gegeneinander verdreht sind, so wie das in der Fig. 2 der Fall ist. Mit anderen Worten sind die Abstände zwischen benachbarten Basisteilen 17 gleich, beziehungsweise sind diese gleichmäßig über den Umfang verteilt. Insbesondere beziehen sich diese Aussagen auf die Mittel- oder Symmetrieachsen der Basisteile 17. Durch diese Maßnahmen sind die Abstände zwischen benachbarten Erregerwicklungen 6 gleich groß, wodurch diese gleichmäßig und dicht gewickelt werden können.

Durch Aufeinanderstapeln mehrerer Rotorbleche 5 ergibt sich das Rotorblechpaket 4. Dabei liegen die Basisteile 17 der Fortsätze 16 jeweils deckungsgleich übereinander.

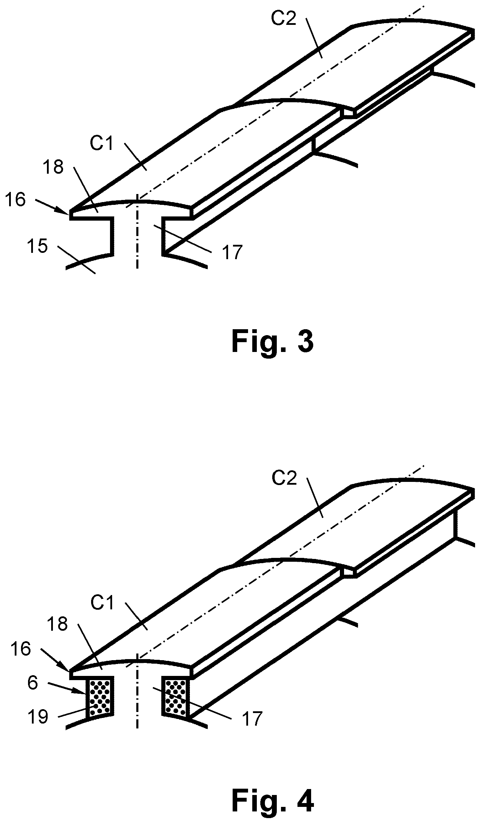

Fig. 3 zeigt dazu einen Ausschnitt aus dem Rotorblechpaket 4 in Schrägansicht, konkret mehrere aufeinandergestapelte beziehungsweise axial aneinandergereihte Fortsätze 16 mehrerer Rotorbleche 5, welche gemeinsam die Basis für einen Pol des Rotors 2 bilden. Aus der Fig. 3 ist erkennbar, dass sich die Fortsätze 16 über die Länge des Rotorblechpakets 4 (das heißt in Axialrichtung) in zwei Abschnitte C1, C2 gliedern. Mit anderen Worten ist die Asymmetrie der Fortsätze 16 über die Länge des Rotorblechpakets 4 (das heißt in Axialrichtung) abschnittsweise konstant und nimmt zwischen den zwei Abschnitten C1, C2 sprunghaft zu.

Vorteilhaft kann dies dadurch erreicht werden, dass die Rotorbleche 5 identisch ausgebildet sind, wobei die Rotorbleche 5 im ersten Abschnitt C1 des Rotorblechpakets 4 gegenüber den Rotorblechen 5 im zweiten Abschnitt C2 des Rotorblechpakets 4 um 180° um eine jeweilige Mittelachse gedreht sind. Die Rotorbleche 5 werden dabei so um die Mittelachse gedreht, dass die Basisteile 17 der Fortsätze 16 beim Aufeinanderstapeln der Rotorbleche 5 jeweils deckungsgleich übereinanderliegen. Beispielsweise können die Rotorbleche 5 im zweiten Abschnitt C2 dazu um eine Symmetrieachse eines Basisteils 17, die rechtwinkelig zur Rotationsachse A des Rotorblechpakets 4 ausgerichtet ist beziehungsweise die in der Ebene eines Rotorbleches 5 durch dessen Mittelpunkt verläuft gedreht sein.

Bei dieser Ausführungsvariante werden vorteilhaft identische Rotorbleche 5 eingesetzt, wodurch sich ein geringer Fertigungsaufwand für das Rotorblechpaket 4 ergibt. Das heißt, die Asymmetrie der Fortsätze 16 ist in den beiden Abschnitten C1, C2 betragsmäßig gleich groß, durch die Drehung der Rotorbleche 5 im zweiten Abschnitt C2 aber entgegengesetzt gerichtet. An dieser Stelle wird auch angemerkt, dass sich der Begriff "Asymmetrie" im Rahmen der Offenbarung stets auf eine Beobachtungsrichtung / Axialrichtung bezieht. Beispielsweise kann die Beobachtungsrichtung in der Fig. 3 längs der aufeinandergestapelten Fortsätze 16 von vorne sein.

Die Fig. 4 zeigt die Fortsätze 16 aus Fig. 3 nun mit montierter Erregerwicklung 6. Wie erwähnt, liegen die Basisteile 17 der Fortsätze 16 jeweils deckungsgleich übereinander. Dadurch kann ein Wicklungsdraht 19 der Erregerwicklung 6 trotz des asymmetrischen Aufbaus der Fortsätze 16 gerade ausgerichtet sein, wodurch das Herstellen der Erregerwicklung 6 technisch vergleichsweise einfach ist.

Bei dem in Fig. 3 und 4 dargestellten Beispiel wurde die unterschiedliche Asymmetrie der Fortsätze 16 durch Verdrehen an sich identischer Rotorbleche 5 erreicht. Dies ist zwar vorteilhaft, aber nicht zwingend. Denkbar wäre vielmehr auch, dass sich die Rotorbleche 5 in der Asymmetrie ihrer Fortsätze 16 voneinander unterscheiden, das heißt die Verdrehung und/oder Verschiebung s des jeweiligen Kopfteils 18 gegenüber dem jeweiligen Basisteil 17 unterschiedlich groß ist. Ein Verdrehen der Rotorbleche 5 im zweiten Abschnitt C2 um 180° um die jeweilige Mittelachse ist dann nicht notwendig.

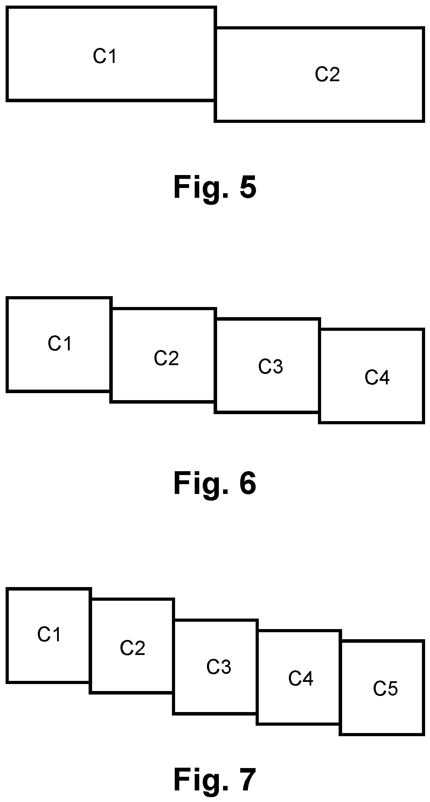

Die Fig. 5 bis 9 zeigen nun schematische Darstellungen verschiedener Fortsätze 16 jeweils in Draufsicht. Fig. 5 zeigt die aufeinandergestapelten Fortsätze 16 aus den Fig. 3 und 4 ergänzend nochmals in der schematischen Draufsicht. Fig. 6 zeigt aufeinandergestapelte Fortsätze 16 für einen Pol des Rotors 2 mit vier linear versetzten Abschnitten C1..C4 in Draufsicht, und Fig. 7 zeigt aufeinandergestapelte Fortsätze 16 für einen Pol des Rotors 2 mit fünf linear versetzten Abschnitten C1..C5 in Draufsicht.

Den in Fig. 5 bis 7 dargestellten Fortsätzen 16 ist gemeinsam, dass die Asymmetrie der Fortsätze 16 über die Länge des Rotorblechpakets 4 jeweils abschnittsweise konstant ist und zwischen zwei Abschnitten C1..C5 sprunghaft jeweils im selben Richtungssinn zunimmt. Dadurch ergibt sich eine lineare beziehungsweise gerade Schrägung, wenn die Asymmetrie (beziehungsweise Verdrehung und/oder Verschiebung s) zwischen den einzelnen Abschnitten C1..C5 jeweils um denselben Betrag zunimmt. Alternativ dazu kann die Schrägung nichtlinear sein, indem die Asymmetrie um unterschiedliche Beträge zunimmt.

Die Verdrehung und/oder Verschiebung s zwischen den einzelnen Abschnitten C1..C5 kann wiederum durch unterschiedliche Rotorbleche 5 erreicht werden, welche sich in der Asymmetrie ihrer Fortsätze 16 voneinander unterscheiden und/oder durch Verdrehen der Rotorbleche 5 um 180° um die jeweilige Mittelachse.

Beispielsweise kann die Ausführungsform nach Fig. 6 durch zwei Rotorbleche 5 mit unterschiedlicher Asymmetrie erreicht werden, die jeweils auch um 180° um die jeweilige Mittelachse verdreht werden. Beispielsweise kann ein Rotorblech 5 eines ersten Typs im ersten Abschnitt C1 in Normallage und im zweiten Abschnitt C2 in gedrehter Lage verwendet werden. Im dritten Abschnitt C3 kann dann ein Rotorblech 5 eines zweiten Typs in Normallage und im vierten Abschnitt C4 in gedrehter Lage verwendet werden. Denkbar wäre zum Beispiel aber auch, dass ein Rotorblech 5 eines ersten Typs im ersten Abschnitt C1 in Normallage und im vierten Abschnitt C4 in gedrehter Lage verwendet wird. Im zweiten Abschnitt C2 kann dann ein Rotorblech 5 eines zweiten Typs in Normallage und im dritten Abschnitt C3 in gedrehter Lage verwendet werden. Selbstverständlich können aber auch vier unterschiedliche Rotorbleche 5 für die Abschnitte C1..C4 eingesetzt werden oder teilweise unterschiedliche Rotorbleche 5 und teilweise identische Rotorbleche 5, die verdreht werden. Beispielsweise könnte ein Rotorblech 5 eines ersten Typs im ersten Abschnitt C1 in Normallage und im zweiten Abschnitt C2 in gedrehter Lage verwendet werden. Im dritten Abschnitt C3 kann dann ein Rotorblech 5 eines zweiten Typs in Normallage und im vierten Abschnitt C4 ein Rotorblech 5 eines dritten Typs in Normallage verwendet werden.

Ganz ähnlich verhält es sich bei der Ausführungsform nach Fig. 7. Hier sind aber zumindest drei unterschiedliche Rotorbleche 5 erforderlich.

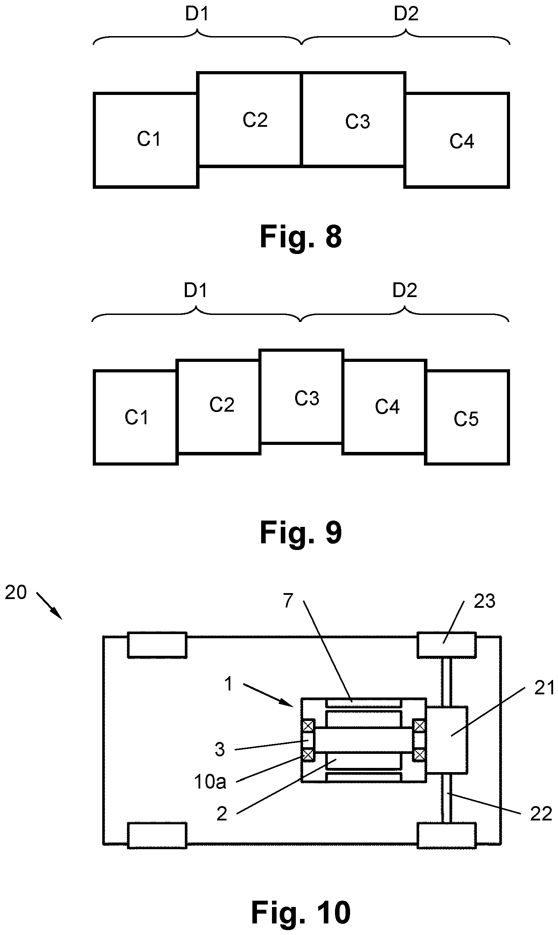

Die Fig. 8 und 9 zeigen nun Ausführungsbeispiele mit pfeilförmiger beziehungsweise V-förmiger Schrägung. Dabei ist die die Asymmetrie der Fortsätze 16 über die Länge des Rotorblechpakets 4 abschnittsweise konstant, wobei diese in einer ersten Abschnittsgruppe D1 zwischen zwei Abschnitten C1..C5 sprunghaft jeweils im selben Richtungssinn zunimmt und in einer daran anschließenden zweiten Abschnittsgruppe D2 zwischen zwei Abschnitten C1..C5 sprunghaft jeweils im selben Richtungssinn abnimmt. Die Schrägung kann wiederum durch Einsatz unterschiedlicher und/oder gedrehter Rotorbleche 5 erreicht werden. Beispielsweise kann ein Rotorblech 5 eines ersten Typs in der Ausführungsform nach Fig. 8 in den Abschnitten C1, C4 in Normallage und in den Abschnitten C2, C3 in gedrehter Lage verwendet werden. Bei der Ausführungsform nach Fig. 9 kann ein Rotorblech 5 eines ersten Typs in den Abschnitten C1, C5 in Normallage und in den Abschnitten C2, C4 in gedrehter Lage verwendet werden. Im Abschnitt C3 wird dann ein Rotorblech 5 eines zweiten Typs eingesetzt, und so weiter.

In den in Fig. 3 bis 9 dargestellten Beispielen ändert sich die Asymmetrie der Kopfteile 18 zwischen zwei Abschnitten C1..C5 sprunghaft. Dies ist zwar von Vorteil, da dadurch nur eine geringe Anzahl an unterschiedlichen Typen von Rotorblechen 5 erforderlich ist, denkbar wäre aber auch, dass eine Asymmetrie der Fortsätze 16 über die Länge des Rotorblechpakets 4 oder über die Länge eines mehr als zwei Rotorbleche 5 aufweisenden Abschnitts C1..C5 des Rotorblechpakets 4 (quasi)kontinuierlich, das heißt von Rotorblech 5 zu Rotorblech 5, zunimmt. Auch in diesem Fall ist die Herstellung einer linearen oder auch einer pfeilförmigen Schrägung möglich.

Die Fig. 10 zeigt schließlich die in ein Fahrzeug 20 eingebaute elektrische Maschine 1. Das Fahrzeug 20 weist zwei Achsen auf, von denen eine angetrieben ist. Konkret ist die elektrische Maschine 1 über ein optionales Getriebe 21 mit den Halbachsen 22 der Hinterachse verbunden. An den Halbachsen 22 sind schließlich die angetriebenen Räder 23 montiert. Die elektrische Maschine 1, das Getriebe 21 und die Halbachsen 22 sind dabei Teil des Antriebsstrangs des Fahrzeugs 20. Der Antrieb des Fahrzeugs 20 erfolgt zumindest teilweise oder zeitweise durch die elektrische Maschine 1. Das heißt, die elektrische Maschine 1 kann zum alleinigen Antrieb des Fahrzeugs 20 dienen oder zum Beispiel im Verbund mit einer Verbrennungskraftmaschine vorgesehen sein (Hybridantrieb).

Abschließend wird festgehalten, dass der Schutzbereich durch die Patentansprüche bestimmt ist. Die Beschreibung und die Zeichnungen sind jedoch zur Auslegung der Ansprüche heranzuziehen. Die in den Figuren enthaltenen Merkmale können beliebig ausgetauscht und miteinander kombiniert werden. Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

### Bezugszeichenliste

- 1: fremderregte elektrische Synchronmaschine
- 2: Rotor
- 3: Rotorwelle
- 4: Rotorblechpaket
- 5: Rotorblech
- 6: Rotorwicklung / Erregerwicklung
- 7: Stator
- 8: Statorblechpaket
- 9: Statorwicklung
- 10a, 10b: (Wälz)lager
- 11: erstes Lagerschild
- 12: zweites Lagerschild
- 13: (mittleres) Gehäuseteil
- 14: Gehäuse
- 15: ringförmiger Innenteil
- 16: Fortsatz
- 17: Basisteil
- 18: Kopfteil
- 19: Wicklungsdraht
- 20: Fahrzeug
- 21: Getriebe
- 22: Halbachse
- 23: Rad

- A: Drehachse
- B: Wellenbohrung
- C1..C5: Abschnitt
- D1, D2: Abschnittsgruppe
- s: Verdrehung / Verschiebung

## Patentansprüche

1. Rotorblech (5) für ein Rotorblechpaket (4) eines Rotors (2) einer fremderregten elektrischen Synchronmaschine (1), umfassend einen ringförmigen Innenteil (15) mit mehreren sternförmig nach außen weisenden Fortsätzen (16), wobei jeder Fortsatz (16) einen an den Innenteil (15) anschließenden Basisteil (17) und einen daran anschließenden breiteren Kopfteil (18) aufweist, **dadurch gekennzeichnet, dass**
der Kopfteil (18) asymmetrisch zum Basisteil (17) angeordnet ist.

2. Rotorblech (5) nach Anspruch 1, **dadurch gekennzeichnet, dass** die Basisteile (17) symmetrisch angeordnet sind.

3. Rotorblechpaket (4) für einen Rotor (2) einer fremderregten elektrischen Synchronmaschine (1), **gekennzeichnet durch** mehrere aufeinandergestapelte Rotorbleche (5) nach Anspruch 1 oder 2, wobei die Basisteile (17) der Fortsätze (16) jeweils deckungsgleich übereinanderliegen.

4. Rotorblechpaket (4) nach Anspruch 3, **dadurch gekennzeichnet, dass** die Rotorbleche (5) in einem ersten Abschnitt (C1) des Rotorblechpakets (4) gegenüber den Rotorblechen (5) in einem zweiten Abschnitt (C2) des Rotorblechpakets (4) um 180° um eine jeweilige Mittelachse gedreht sind.

5. Rotorblechpaket (4) nach Anspruch 3 oder 4, **gekennzeichnet durch** mehrere Rotorbleche (5), welche sich in der Asymmetrie ihrer Fortsätze (16) voneinander unterscheiden.

6. Rotorblechpaket (4) nach einem der Ansprüche 3 bis 5, **dadurch gekennzeichnet, dass** die Asymmetrie der Fortsätze (16) über die Länge des Rotorblechpakets (4) abschnittsweise konstant ist und zwischen zwei Abschnitten (C1..C5) sprunghaft jeweils im selben Richtungssinn zunimmt.

7. Rotorblechpaket (4) nach einem der Ansprüche 3 bis 5, **dadurch gekennzeichnet, dass** die Asymmetrie der Fortsätze (16) über die Länge des Rotorblechpakets (4) abschnittsweise konstant ist und in einer ersten Abschnittsgruppe (D1) zwischen zwei Abschnitten (C1..C5) sprunghaft jeweils im selben Richtungssinn zunimmt und in einer daran anschließenden zweiten Abschnittsgruppe (D2) zwischen zwei Abschnitten (C1..C5) sprunghaft jeweils im selben Richtungssinn abnimmt.

8. Rotorblechpaket (4) nach Anspruch 5, **dadurch gekennzeichnet, dass** die Asymmetrie der Fortsätze (16) über die Länge des Rotorblechpakets (4) oder eines Abschnitts des Rotorblechpakets (4) kontinuierlich zunimmt.

9. Rotor (2) für eine fremderregte elektrische Synchronmaschine (1), **gekennzeichnet durch** eine Rotorwelle (3), ein auf der Rotorwelle (3) angeordnetes Rotorblechpaket (4) nach einem der Ansprüche 3 bis 8 sowie mehrere Erregerwicklungen (6), welche jeweils um mehrere Basisteile (17) gewunden sind.

10. Fremderregte elektrische Synchronmaschine (1) mit einem Stator (7), **gekennzeichnet durch** einen in dem Stator (7) angeordneten Rotor (2) nach Anspruch 9, der gegenüber dem Stator (7) um die Rotationsachse (A) des Rotors (2) drehbar gelagert ist.

11. Fahrzeug (20) mit einem Antriebsstrang, der eine fremderregte elektrische Synchronmaschine (1) nach Anspruch 10 aufweist, die zum Antreiben des Fahrzeugs (20) vorgesehen ist.
